# EUROPÄISCHE PATENTSCHRIFT

(11) **EP 4 228 925 B1**
(45) Veröffentlichungstag und Bekanntmachung des Hinweises auf die Patenterteilung: **21.02.2024**
(21) Anmeldenummer: 21777717.6
(22) Anmeldetag: 15.09.2021
(51) Int. Cl.: B60Q 1/50, B60K 35/00

(54) **KRAFTFAHRZEUG MIT EINER AUSSENLEUCHTE UND VERFAHREN ZUM BETRIEB EINER AUSSENLEUCHTE**
MOTOR VEHICLE WITH AN EXTERIOR LIGHTING UNIT, AND METHOD FOR OPERATING AN EXTERIOR LIGHTING UNIT
VÉHICULE AUTOMOBILE ÉQUIPÉ D'UN FEU EXTÉRIEUR ET PROCÉDÉ POUR FAIRE FONCTIONNER UN FEU EXTÉRIEUR

(30) Priorität: 14.10.2020 DE 102020126929; 14.10.2020 DE 202020105875 U
(43) Veröffentlichungstag der Anmeldung: 23.08.2023
(73) Patentinhaber: Audi AG, 85045 Ingolstadt (DE)
(72) Erfinder: KAMMANN, Tanja, 80803 München (DE); GLEAVE, Ashley, 85114 Buxheim (DE); HORN, Michael, 85049 Ingolstadt (DE); HAHN, Viktor, 86673 Bergheim (DE); MANDERSCHEID, Maximilian, 85296 Rohrbach (DE)
(74) Vertreter: Lindner Blaumeier Patent- und Rechtsanwälte
(86) Internationale Anmeldenummer: PCT/EP2021/075286
(87) Internationale Veröffentlichungsnummer: WO 2022/078694

(56) Entgegenhaltungen:
- EP-A1- 3 492 317
- WO-A1-2016/050503
- DE-A1-102014 111 119
- US-A1- 2016 229 395
- US-A1- 2018 312 106
- US-A1- 2020 094 734

## Beschreibung

Die Erfindung betrifft ein Kraftfahrzeug mit einer Außenleuchte und einer Steuereinrichtung, wobei die Steuereinrichtung dazu eingerichtet ist, einerseits in einem ersten Betriebsmodus die Außenleuchte zur Ausgabe eines ersten Leuchtmusters anzusteuern und eine Wechselbedingung auszuwerten und bei Erfüllung der Wechselbedingung in einen zweiten Betriebsmodus zu wechsein und andererseits in dem zweiten Betriebsmodus die Außenleuchte zur Ausgabe eines von dem ersten Leuchtmuster unterschiedlichen zweiten Leuchtmusters anzusteuern wobei die Erfüllung der Wechselbedingung davon abhängt, welcher von mehreren Fahrmodi des Kraftfahrzeugs für einen momentanen oder zukünftigen Betrieb ausgewählt ist. Daneben betrifft die Erfindung ein Verfahren zum Betrieb wenigstens einer Außenleuchte eines Kraftfahrzeugs.

Außenleuchten von Kraftfahrzeugen werden einerseits dazu genutzt, das Fahrzeugumfeld auszuleuchten, und andererseits dazu, anderen Verkehrsteilnehmern Informationen, beispielsweise bezüglich der Position des Kraftfahrzeugs und bezüglich einem Bremsen beziehungsweise geplanten Abbiegevorgang, zukommen zu lassen. Es wurde zudem bereits vorgeschlagen, Außenbeleuchtungen zur Übertragung von Zusatzinformationen heranzuziehen. Beispielsweise schlägt die Druckschrift DE 20 2004 009 030 U1 vor, einen zusätzlichen Anzeigebereich einer Bremsleuchte zu nutzen, um einen Schriftzug, ein Logo, ein Piktogramm oder eine Figur für einen nachfolgenden Fahrer anzuzeigen. Diese Anzeige kann manuell durch einen Benutzer aktiviert werden und dann dauerhaft aktiv sein oder nur dann aktiv sein, wenn kein Bremsvorgang vorliegt.

Während das beschriebene Vorgehen beispielsweise für Werbezwecke beziehungsweise aus Designgründen vorteilhaft sein kann, ist es nur bedingt geeignet, um anderen Verkehrsteilnehmern gezielt den Fahrbetrieb betreffende Informationen zukommen zu lassen, da eine solche Informationsübermittlung von einer manuellen Aktivierung beziehungsweise Deaktivierung durch den Fahrer des Kraftfahrzeugs abhängt.

Die Druckschrift US 2020/0094734 A1 offenbart ein Kraftfahrzeug mit einer Beleuchtungseinrichtung, die in Abhängigkeit eines Betriebszustands des Kraftfahrzeugs angesteuert wird. Durch Variation der Leuchtintensität, der Größe, der Leuchtfläche, einer Blinkrate beziehungsweise der Leuchtfarbe können verschiedene Betriebszustände signalisiert werden. Hierbei werden verschiedene Zustände eines autonomen Fahrbetriebs, nämlich die Einleitung des autonomen Fahrbetriebs, ein autonomes Losfahren und ein Fahren, Abbiegen und Stoppen im autonomen Betrieb durch unterschiedliche Lichtabstrahlung signalisiert.

Die Druckschrift US 2018/0312106 A1 betrifft eine Leuchteinrichtung, die dazu eingerichtet ist, unterschiedliche Automatisierungsgrade des Fahrzeugs durch eine entsprechende Ansteuerung verschiedener Leuchtmittel zu visualisieren.

Die Druckschrift EP 3 492 317 A1 offenbart eine Beleuchtungseinrichtung eines Kraftfahrzeugs, wobei bei einem automatisierten Betrieb des Kraftfahrzeugs Lichtsignale ausgegeben werden können, wenn ein Fußgänger im Fahrzeugumfeld erkannt wird.

Das Dokument US 2016/229395 A1 schlägt vor, ein Lichtsignal, das ein zukünftiges Verhalten des eigenen Kraftfahrzeugs, also ein zukünftiges Fahrmanöver, indiziert, an andere Verkehrsteilnehmer zu kommunizieren.

Ein Rücklicht, bei dem für unterschiedliche Fahrten oder auf unterschiedliche Einstellungen eines Betreibers des Kraftfahrzeugs hin unterschiedliche Leuchtmuster aktiviert werden können, ist aus der Druckschrift DE 10 2014 111 119 A1 bekannt. Hierbei kann nach einem längeren Bremsvorgang, etwa an einer Ampel, das Erscheinungsbild des Rücklichts geändert werden.

Aus der Druckschrift WO 2016/050503 A1 ist eine Einrichtung zur Signalgabe bekannt, über die Symbole ausgegeben werden können.

Der Erfindung liegt somit die Aufgabe zugrunde, die Funktionalität von Außenleuchten zu erweitern, wobei insbesondere anderen Verkehrsteilnehmern eine bessere Beurteilung von Fahrsituationen ermöglicht werden soll.

Die Aufgabe wird erfindungsgemäß durch ein Kraftfahrzeug der eingangs genannten Art gelöst, wobei die oder eine weitere Steuereinrichtung des Kraftfahrzeugs dazu eingerichtet ist, in Abhängigkeit des gewählten Fahrmodus wenigstens einen Parameter eines Fahrwerks und/oder eines Antriebsstrangs, und zwar die Schaltdrehzahlen eines Automatikgetriebes und/oder eine Kennlinie des Gaspedals und/oder einen Parameter eines Differentials, und/oder einer Lenkung, und zwar eine Kennlinie der Lenkung und/oder eine Lenkübersetzung und/oder ein Unterstützungsgrad einer Servolenkung, vorzugeben.

In modernen Kraftfahrzeugen ist es häufig möglich, zwischen verschiedenen Fahrmodi des Kraftfahrzeugs zu wählen, die unterschiedliche Parametrisierungen von verschiedenen Fahrzeugkomponenten, beispielsweise des Fahrwerks und des Antriebsstrangs, nutzen. So kann es beispielsweise möglich sein, zwischen Fahrmodi für ein eher sportliches Fahren, für ein eher komfortorientiertes Fahren und für ein effizienzoptimiertes Fahren zu wählen. Durch das erfindungsgemäße Vorgehen kann der genutzte Fahrmodus unaufdringlich an andere Verkehrsteilnehmer kommuniziert werden, so dass diese beispielsweise frühzeitig relevante Zusatzinformationen über ein zu erwartendes Beschleunigungsverhalten, zu erwartende Lenkeingriffe und Ähnliches erhalten können.

Fahrerzustände, insbesondere Gemütszustände, können letztlich auch als eine Art personenbezogener Fahrmodus aufgefasst werden, da beispielsweise unterschiedliche emotionale Affekte zu einem unterschiedlichen Fahrverhalten des Fahrers führen können. Durch Kommunikation des Fahrerzustands über die Außenleuchte können andere Verkehrsteilnehmer somit auch in diesem Fall auf ein zu erwartendes Fahrverhalten des eigenen Kraftfahrzeugs aufmerksam gemacht werden.

Somit können durch die erfindungsgemäße Nutzung der Außenleuchte andere Fahrer beziehungsweise automatisierte Fahrsysteme mit höherer Genauigkeit ein voraussichtliches zukünftiges Fahrverhalten des eigenen Kraftfahrzeugs voraussagen, womit eine erheblich bessere Koordination unterschiedlicher Verkehrsteilnehmer ermöglicht wird.

Wie später noch genauer erläutert werden wird, ist es auch möglich, mehr als zwei Betriebsmodi beziehungsweise mehr als zwei Leuchtmuster vorzusehen, so dass eine größere Anzahl von Fahrmodi beziehungsweise Fahrerzuständen visualisiert werden kann. Vorteilhaft wird zudem ermöglicht, bei Erfüllung einer entsprechenden weiteren Wechselbedingung von dem zweiten Betriebsmodus in den ersten Betriebsmodus zurück zu wechseln.

Im einfachsten Fall kann die Außenleuchte für das erste Leuchtmuster deaktiviert sein und für das zweite Leuchtmuster aktiviert sein. Bevorzugt ist die Außenleuchte jedoch zur Abgabe beider Leuchtmuster aktiv. Insbesondere kann die Form des Leuchtmusters angepasst werden, z.B. indem mehrere separat ansteuerbare Leuchtsegmente oder Segmente einer Blende in den verschiedenen Betriebsmodi unterschiedlich angesteuert werden. Alternativ oder ergänzend kann lokal, z.B. in einzelnen Segmenten, oder über die gesamte leuchtende Fläche die Farbe und/oder die Intensität der Beleuchtung variiert werden, um unterschiedliche Leuchtmuster zu realisieren.

Bei dem ersten und/oder dem zweiten Leuchtmuster kann es sich auch um ein zeitliches Muster handeln, das eine zeitliche Abfolge beziehungsweise ein kontinuierliches Überblenden zwischen mehreren Leuchtbildern umfasst.

Beispielsweise kann sowohl als erstes Leuchtmuster als auch als zweites Leuchtmuster ein Blinken genutzt werden, wobei Leuchtbilder unterschiedlicher Form abgestrahlt werden.

Die Außenleuchte kann eine Front-, Heck- oder Seitenbeleuchtung sein. Somit können beispielsweise Informationen an nachfolgende oder auch vorausfahrende Verkehrsteilnehmer ausgegeben werden. Sowohl der erste als auch der zweite Betriebsmodus können während des normalen Fahrbetriebs genutzt werden. Beispielsweise kann bei einem Wechsel des Fahrmodus während der Fahrt von dem ersten in den zweiten Betriebsmodus gewechselt werden oder umgekehrt. Die genutzten Leuchtmuster sind daher vorzugsweise so gewählt, dass sie gesetzlichen Rahmenbedingungen für den Fahrbetrieb genügen.

Die Erfüllung der Wechselbedingung hängt davon ab, welcher der mehreren Fahrmodi des Kraftfahrzeugs für den momentanen oder zukünftigen Betrieb ausgewählt ist, wobei die oder eine weitere Steuereinrichtung des Kraftfahrzeugs dazu eingerichtet ist, in Abhängigkeit dieses gewählten Fahrmodus wenigstens einen Parameter eines Fahrwerks und/oder eines Antriebsstrangs und/oder einer Lenkung des Kraftfahrzeugs vorzugeben. Die oder die weitere Steuereinrichtung des Kraftfahrzeugs kann zusätzlich dazu eingerichtet sein, in Abhängigkeit des gewählten Fahrmodus wenigstens einen Parameter eines Sicherheitssystems des Kraftfahrzeugs vorzugeben. Als Fahrmodi können somit beispielsweise ein Fahrmodus zur Effizienzoptimierung, ein Fahrmodus zur Komfortoptimierung und ein Dynamik- beziehungsweise Sportfahrmodus wählbar sein. Insbesondere kann jedem dieser Fahrmodi ein jeweiliger Betriebsmodus und somit ein jeweiliges Leuchtmuster zugeordnet sein, das dann abgestrahlt wird, wenn der entsprechende Fahrmodus gewählt ist. Zur Einstellung der Parameter kann die Steuereinrichtung z.B. einen oder mehrere Aktoren des Kraftfahrzeugs ansteuern bzw. Parameter einer entsprechenden weiteren Steuereinrichtung anpassen.

Als Parameter des Fahrwerks kann beispielsweise eine Kennlinie von Stoßdämpfern beziehungsweise Luftfedern angepasst werden beziehungsweise allgemein eine Bodenfreiheit, eine Federhärte und/oder eine Dämpfung der Federung eingestellt werden. Beispielsweise kann die Stärke einer magnetischen Dämpfung beziehungsweise ein Fülldruck einer Luftfederung eingestellt werden.

Bezüglich des Antriebsstrangs werden als Parameter erfindungsgemäß die Schaltdrehzahlen eines Automatikgetriebes, eine Kennlinie des Gaspedals und/oder Parameter eines Differentials, also beispielsweise ein variabler Sperrgrad beziehungsweise eine aktive Momentverteilung, angepasst. Optional können ergänzend ein Überblenden zwischen einem elektrischen Antrieb und einem Antrieb durch einen Verbrennungsmotor in Hybridfahrzeugen, eine Optimierung des Fahrbetriebs auf einen ausgeglichenen Ladezustand eines Energiespeichers oder auf eine kurzfristige optimale Fahrleistungen, Einspritzbeziehungsweise Zündzeitpunkte und/oder Parameter zur Ventilsteuerung angepasst werden.

Als Parameter eines Sicherheitssystems können beispielsweise Auslöseschwellen für Gurtstraffer oder Eingriffsschwellen für Fahrerassistenzsysteme zur Kollisionsvermeidung, die längs- und/oder querführend sein können, eingestellt werden.

Als Parameter der Lenkung wird erfindungsgemäß eine Kennlinie der Lenkung, insbesondere geschwindigkeitsabhängig, und/oder eine Lenkübersetzung und/oder ein Unterstützungsgrad einer Servolenkung eingestellt. Ergänzend kann die Stärke einer haptischen Rückkopplung eines Steer-by-Wire-Systems eingestellt werden.

Ergänzend kann die oder die weitere Steuereinrichtung dazu eingerichtet sein, das Kraftfahrzeuge in zumindest einem der Fahrmodi zumindest teilautomatisiert zu führen, wobei sich die Fahrmodi bezüglich des Automatisierungsgrads unterscheiden. Als Automatisierungsgrade können hierbei insbesondere die Autonomiestufen gemäß SAE J3016 betrachtet werden. Beispielsweise kann ein unterschiedlicher Betriebsmodus genutzt werden beziehungsweise ein unterschiedliches Leuchtmuster abgestrahlt werden, je nach dem ob keine Automation erfolgt, eine Fahrassistenz erfolgt, eine Teilautomation erfolgt, eine bedingte Automation erfolgt, eine hohe Automation erfolgt oder eine volle Automation erfolgt. Es ist hierbei selbstverständlich möglich, dass in einem erfindungsgemäßen Kraftfahrzeug nur eine Teilgruppe der genannten Automatisierungsgrade, also beispielsweise nur zwei oder drei Automatisierungsgrade implementiert sind, die durch unterschiedliche Betriebsmodi und somit durch unterschiedliche Leuchtmuster visualisiert werden können.

In dem Fall, dass die Erfüllung der Wechselbedingung zusätzlich von dem ermittelten Fahrerzustand abhängt, kann das Kraftfahrzeug wenigstens einen Sensor, insbesondere einen bildgebenden Sensor, zur Erfassung von den Fahrer betreffenden Sensordaten umfassen, wobei die Steuereinrichtung dazu eingerichtet ist, den Fahrerzustand in Abhängigkeit der Sensordaten zu ermitteln. Ansätze zur Ermittlung von Fahrerzuständen, beispielsweise eines Müdigkeits- beziehungsweise Aufmerksamkeitszustands, sind im Stand der Technik an sich bekannt und sollen nicht detailliert erläutert werden. Durch einen bildgebenden Sensor können beispielsweise eine Blickrichtung, Pupillenbewegungen, ein Blinzeln und Ähnliches erkannt werden. Ergänzend oder alternativ können beispielsweise geringfügige Lenkbewegungen, wie sie vom Fahrer im Fahrbetrieb unbewusst ständig durchgeführt werden, ausgewertet werden. Wird nun beispielsweise erkannt, dass der Fahrer müde oder unaufmerksam ist, kann, wie an sich bekannt, ein entsprechender Hinweis an den Fahrer gegeben werden, dass er zeitnah den Fahrbetrieb einstellen sollte. Zusätzlich können durch Wechsel des Betriebsmodus und somit Abstrahlung eines anderen Leuchtmusters andere Verkehrsteilnehmer darauf hingewiesen werden, dass aufgrund des ermittelten Fahrerzustands Reaktionszeiten erhöht sein könnten oder Ähnliches.

Prinzipiell kann es sich bei den Sensoren alternativ um ein Bedienmittel handeln, das nicht direkt auf den Fahrbetrieb einwirkt, beispielsweise einen Touchscreen, einen Drehdrücksteller oder ein Mikrofon zur Erfassung von Spracheingaben. Dies kann beispielsweise dazu dienen, dass die Steuereinrichtung den Zustand des Fahrers, beispielsweise seine Gemütslage, aktiv, beispielsweise über ein Dialogsystem, abfragen kann.

In dem Fall, dass die Erfüllung der Wechselbedingung zusätzlich von dem ermittelten Fahrerzustand abhängt, kann das Kraftfahrzeug eine Kommunikationsschnittstelle zur Kommunikation mit einer separat von dem Kraftfahrzeug ausgebildeten Kommunikationseinrichtung, insbesondere mit einem Smartphone oder einer Smartwatch oder einem Tablet- PC, umfassen, wobei die Steuereinrichtung dazu eingerichtete sein kann, den Fahrerzustand in Abhängigkeit von über die Kommunikationsschnittstelle von der Kommunikationseinrichtung empfangenen Zustandsinformationen zu ermitteln. Beispielsweise kann die Kommunikationseinrichtung eine Sensorik umfassen, die physiologische Merkmale des Fahrers, beispielsweise eine Hauttemperatur, einen Puls und/oder einen Blutdruck, als Zustandsinformationen erfassen kann. Ergänzend oder alternativ kann die Kommunikationseinrichtung Bedienelemente aufweisen, die es, wie obig erläutert, ermöglichen, mit einem Fahrer zu kommunizieren, um beispielsweise dessen Gemütslage zu ermitteln. Aufgrund der vorteilhaften möglichen Kombination von Kommunikationseinrichtungen im Kraftfahrzeug betrifft die Erfindung auch eine Vorrichtung, die das erfindungsgemäße Kraftfahrzeug sowie eine Kommunikationseinrichtung, insbesondere ein Smartphone, eine Smartwatch oder einen Tablet-PC, umfasst.

Das erste und/oder das zweite Leuchtmuster können fest vorgegeben sein. Insbesondere kann durch einen bestimmten Hersteller oder herstellerübergreifend ein Katalog von Leuchtmustern mit jeweils zugehöriger Bedeutung vorgegeben sein. Beispielsweise kann somit ein bestimmtes Leuchtmuster stets einem Sportmodus und ein bestimmtes Leuchtmuster einem Komfortmodus entsprechen oder Ähnliches. Dies ermöglicht es Fahrern oder entsprechende Leuchtmuster auswertenden Fahrerassistenzsystemen anderer Kraftfahrzeuge unmittelbar und eindeutig anhand eines solchen Leuchtmusters den Fahrmodus beziehungsweise den Fahrerzustand zu erkennen.

Alternativ wäre es beispielsweise auch möglich, dass wenigstens Teile der genutzten Leuchtmuster fahrerseitig vorgebbar sind, beispielsweise über eine entsprechende App eines Smartphones oder eine andere fahrzeugexterne Einrichtung und/oder über Bedienmittel des Kraftfahrzeugs. Vorzugsweise wird eine Nutzung von (pseudo-)zufälligen Mustern vermieden, da diese wenig geeignet sind, bestimmte Informationen zu übermitteln und es zudem für solche Muster erheblich aufwendiger ist, gesetzliche Vorgaben einzuhalten.

Das Leuchtmuster kann ein rein räumliches Muster sein, das sich zeitlich nicht ändert. Alternativ kann ein zeitliches Muster, also eine zeitliche Abfolge von Leuchtbildern, genutzt werden. Die zeitliche Abfolge kann die Leuchthelligkeit der gesamten Außenleuchte variieren, also beispielsweise ein Blinken implementieren, oder hart oder kontinuierlich zwischen verschiedenen räumlichen Mustern beziehungsweise Leuchtbildern wechseln beziehungsweise überblenden. Hierdurch können auch bewegte Lichtmuster, also beispielsweise ein Wischen oder Ähnliches umgesetzt werden. Ein Blinken kann dadurch realisiert werden, dass ein bestimmtes vorgegebenes räumliches Muster, also insbesondere eine fahrmodus- bzw. fahrerzustandspezifische Lichtsignatur, und ein leeres Muster, bei dem kein Segment aktiv ist, abwechselnd genutzt werden. Zeitliche Muster können beispielsweise auch Dimmrampen, ein Pulsieren, eine örtliche Verlagerung von beleuchteten Bereichen und Ähnliches umfassen. Räumliche beziehungsweise zeitliche Leuchtmuster, die auch als Lichtsignatur bezeichnet werden können, können im Speicher des Kraftfahrzeugs selbst hinterlegt sein oder beispielsweise drahtlos von Back-End abgerufen werden.

Die Steuereinrichtung kann dazu eingerichtet sein, die Außenleuchte sowohl in dem ersten als auch in dem zweiten Betriebsmodus als Tagfahrlicht oder Positionslicht oder Schlusslicht anzusteuern. Somit ist es zweckmäßig, das erste und zweite Leuchtmuster beziehungsweise alle genutzten Leuchtmuster so zu wählen, dass sie den rechtlichen Anforderungen für die entsprechende Verwendung entsprechen. Entsprechende Vorgaben ergeben sich beispielsweise aus der Regelung 48 der Wirtschaftskommission der Vereinten Nationen für Europa (UN/ECE). Rechtliche Anforderungen können hierbei insbesondere die genutzten Farben und/oder Größen beziehungsweise Anordnungen leuchtender Flächen vorgeben beziehungsweise vorgeben, ob ein bestimmtes räumliches Muster kontinuierlich abgestrahlt werden soll oder zeitlich veränderliche Muster, beispielsweise ein Blinken, genutzt werden können oder müssen.

Die Außenleuchte kann mehrere unabhängig ansteuerbare Segmente aufweisen, wobei sich das erste und zweite Leuchtmuster zumindest bezüglich der Ansteuerung eines der Segmente voneinander unterscheiden. Dies ist insbesondere zweckmäßig, wenn über eine einzige Außenleuchte einerseits eine übliche Lichtfunktion, also beispielsweise ein Tagfahrlichte, ein Positionslicht oder ein Schlusslicht, sowie andererseits die Informationsgabe an weitere Verkehrsteilnehmer bezüglich des genutzten Fahrmodus beziehungsweise Fahrerzustands implementiert werden sollen. Insbesondere können zur Abstrahlung der verschiedenen Leuchtmuster zumindest teilweise unterschiedliche der Segmente genutzt werden. Durch Ansteuerung unterschiedlicher Segmente zur Lichtabgabe bzw. der Ansteuerung der Segmente zur Lichtabstrahlung mit unterschiedlichen Helligkeiten können Anforderungen an die Größe bzw. Anordnung der leuchtenden Fläche, die Leuchthelligkeit und die Farbe für die entsprechende Lichtfunktion unabhängig von dem genutzten Leuchtmuster erfüllt werden.

Die verschiedenen Segmente können alle innerhalb einer Leuchtfläche liegen, jedoch auch räumlich zueinander versetzte Leuchtflächen bilden, wobei durch eine dreidimensionale Anordnung mehrerer Leuchtflächen ein charakteristisches und ein prägnantes Erscheinungsbild erreicht werden kann. Pro Segment kann ein einzelnes Leuchtmittel oder können mehrere gemeinsam angesteuerte Leuchtmittel vorgesehen seien, beispielsweise LEDs oder OLEDs.

Die Nutzung von Außenleuchten mit mehreren unabhängig ansteuerbaren Segmenten kann neben der erläuterten Kommunikation des Fahrmodus bzw. des Fahrerzustands an andere Verkehrsteilnehmer beispielsweise dazu genutzt werden, unterschiedliche Lichtsignaturen für Benutzer zur Auswahl zu stellen, die beispielsweise im Fahrzeug selbst bzw. über eine externe Einrichtung, z.B. ein Smartphone oder einen Backend-Server, gewählt werden können oder bereits beim Fahrzeugkauf ausgewählt werden können. Zudem können durch eine solche Segmentierung weitere Funktionen implementiert werden, beispielsweise eine Annäherungswarnung, bei der besonders viele, insbesondere alle, Segmente, aktiviert werden, wenn sich ein weiteres Fahrzeug zu stark annähert.

Die Steuereinrichtung kann dazu eingerichtet sein, in dem zweiten Betriebsmodus wenigstens eine weitere Wechselbedingung auszuwerten und bei Erfüllung einer jeweiligen der weiteren Wechselbedingungen in den ersten Betriebsmodus oder einen jeweiligen weiteren Betriebsmodus zu wechseln, wobei die Erfüllung der jeweiligen weiteren Wechselbedingungen davon abhängt, welcher der mehreren Fahrmodi des Kraftfahrzeugs für einen momentanen oder zukünftigen Betrieb ausgewählt ist, und/oder wobei die Erfüllung der jeweiligen weiteren Wechselbedingung von dem ermittelten Fahrerzustand abhängt. Hierdurch kann ein Rückwechsel in den ersten Betriebsmodus bzw. zu dem ersten Leuchtmuster erfolgen, wenn ein ursprünglicher Fahrmodus bzw. Fahrerzustand wieder erreicht wird. Zudem können mehrere verschiedene Fahrmodi bzw. Fahrerzustände durch entsprechende Betriebsmodi und Leuchtmuster visualisiert werden.

Beispielsweise könnte im ersten Betriebsmodus eine Standardlichtsignatur bzw. ein Standardleuchtmuster genutzt werden, wobei bei Wechsel in einen bestimmten Fahrmodus oder bei Ermittlung eines bestimmten Fahrerzustands in den zweiten Betriebsmodus und somit zum zweiten Leuchtmuster gewechselt wird. Wird dieser Fahrmodus wieder verlassen bzw. dieser Fahrerzustand nicht länger ermittelt, kann zum ursprünglichen ersten Leuchtmuster und Betriebszustand zurückgewechselt werden. Es ist jedoch auch möglich, dass im Hintergrund die Standardlichtsignatur, die beispielsweise fahrerseitig vorgebbar sein kann, auf eine andere Standardlichtsignatur geändert wurde, sodass beim Rückwechsel ein anderes Leuchtmuster resultiert.

Der Wechsel des Fahrmodus und somit des abgestrahlten Leuchtmusters bzw. der Lichtsignatur kann manuell durch den Fahrer erfolgen, beispielsweise indem ein entsprechendes Bedienelement im Fahrzeuginnenraum bzw. an einer separat ausgebildeten Kommunikationseinrichtung betätigt wird. Alternativ kann auch ein automatisches Wechsel des Fahrmodus erfolgen. Beispielsweise kann in Abhängigkeit des Ladezustands einer Batterie des Kraftfahrzeugs in einen effizienzoptimierten Modus gewechselt werden oder ein Wechsel des Fahrmodus kann automatisch erfolgen, wenn ein bestimmter Fahrerzustand, beispielsweise ein müder oder unaufmerksamer Fahrer, erkannt wird.

Neben dem erfindungsgemäßen Kraftfahrzeug betrifft die Erfindung ein Verfahren zum Betrieb wenigstens eine Außenleuchte eines Kraftfahrzeugs, wobei
- die Außenleuchte in einem ersten Betriebsmodus zur Ausgabe eines ersten Leuchtmusters ansteuert wird,
- während des Betriebs im ersten Betriebsmodus wiederholt eine Wechselbedingung ausgewertet wird, wobei im Rahmen dieser Auswertung berücksichtigt wird, welcher von mehreren Fahrmodi des Kraftfahrzeugs für einen momentanen oder zukünftigen Betrieb ausgewählt ist,
- bei Erfüllung der Wechselbedingung in eine zweiten Betriebsmodus gewechselt wird, und
- die Außenleuchte in dem zweiten Betriebsmodus zur Ausgabe eines von dem ersten Leuchtmuster unterschiedlichen zweiten Leuchtmusters angesteuert wird,
wobei durch die oder eine weitere Steuereinrichtung des Kraftfahrzeugs in Abhängigkeit des gewählten Fahrmodus wenigstens ein Parameter eines Fahrwerks und/oder eines Antriebsstrangs, und zwar die Schaltdrehzahlen eines Automatikgetriebes und/oder eine Kennlinie des Gaspedals und/oder einen Parameter eines Differentials, und/oder einer Lenkung, und zwar eine Kennlinie der Lenkung und/oder eine Lenkübersetzung und/oder ein Unterstützungsgrad einer Servolenkung, vorgegeben wird.

Die zum erfindungsgemäßen Kraftfahrzeug bzw. zur erfindungsgemäßen Vorrichtung, die zusätzlich eine Kommunikationseinrichtung umfasst, offenbarten Merkmale können mit den dort genannten Vorteilen auf das erfindungsgemäße Verfahren übertragen werden und umgekehrt.

Weiteren Vorteile und Einzelheiten der Erfindung ergeben sich aus den folgenden Ausführungsbeispielen sowie den zugehörigen Zeichnungen. Hierbei zeigen schematisch:
- Fig. 1: Ein Ausführungsbeispiel eines erfindungsgemäßen Kraftfahrzeugs, durch das ein Ausführungsbeispiel des erfindungsgemäßen Verfahrens durchgeführt wird, und
- Fig. 2 und 3: Detailansichten einer Außenleuchte des in Fig. 1 gezeigten Kraftfahrzeugs mit unterschiedlichen abgestrahlten Leuchtmustern.

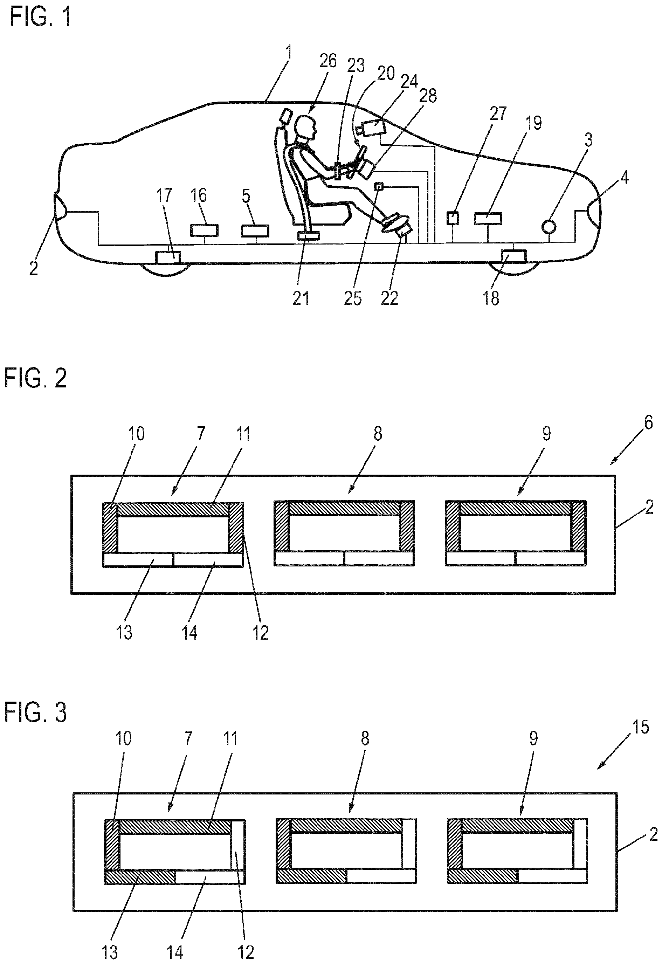

Fig. 1 zeigt ein Kraftfahrzeug 1 mit mehreren Außenleuchten 2, 3, 4 und einer Steuereinrichtung 5 zur Steuerung der Außenleuchten 2, 3, 4. Die Außenleuchte 2 ist ein Rücklicht, die Außenleuchte 3 ein seitliches Positionslicht und die Außenleuchte 4 ein Tagfahrlicht.

Wie in den Fig. 2 und 3 beispielhaft für die Außenleuchte 2 dargestellt ist, umfasst die jeweilige Außenleuchte 2, 3, 4 jeweils mehrere Segmente 10 - 14, die separat ansteuerbar sind. Die Außenleuchte 2 umfasst hierbei drei separate Leuchtflächen 7, 8, 9, die insbesondere räumlich versetzt zueinander angeordnet sind, um ein interessantes Leuchtbild zu erzeugen.

In dem in Fig. 2 dargestellten Leuchtmuster 6 sind hierbei für die jeweilige Leuchtfläche 7, 8, 9 die Segmente 10, 11, 12 aktiv und die Segmente 13, 14 abgeschaltet. Wird durch die Steuereinrichtung 5 erkannt, dass eine Wechselbedingung erfüllt ist, wechselt diese von einem ersten Betriebsmodus, in dem die Außenleuchte 2 zur Ausgabe des ersten Leuchtmusters 6 angesteuert wird, in einen zweiten Betriebsmodus, in dem die Außenleuchte 2 zur Ausgabe des in Fig. 3 dargestellten zweiten Leuchtmusters 15 angesteuert wird. In diesem sind für die jeweilige Leuchtfläche 7, 8, 9 die Segmente 10, 11, 13 aktiv und die Segmente 12, 14 abgeschaltet.

In dem in Fig. 1 dargestellten Kraftfahrzeug 1 kann ein solcher Wechsel von Leuchtmustern 6, 15 dazu verwendet werden, anderen Verkehrsteilnehmern Informationen zukommen zu lassen, in welchem von mehreren Fahrmodi das Kraftfahrzeug 1 betrieben wird. Ergänzend kann das genutzte Leuchtmuster 6, 15 bzw. die Wahl des entsprechenden Betriebszustands vom ermittelten Fahrerzustand des Fahrers 26 abhängen.

Im ersten Fall kann das Leuchtmuster 6 beispielsweise einem Komfortmodus und das Leuchtmuster 15 beispielsweise einem Sportmodus entsprechen. Entsprechende Fahrmodi können durch den Fahrer 26 durch ein Bedienmittel 25 des Kraftfahrzeugs 1 anwählbar sein. In Abhängigkeit des gewählten Fahrmodus werden durch die weitere Steuereinrichtung 16 des Kraftfahrzeugs 1 bzw. in einer alternativen Ausgestaltung unmittelbar durch die Steuereinrichtung 5 selbst Parameter des Fahrwerks 17, 18, das Antriebsstrangs 19, der Lenkung 20 und optional des Sicherheitssystems 21 eingestellt. Beispiele für solche Einstellungen wurden bereits im allgemeinen Teil der Beschreibung erläutert und sollen hier nicht detailliert widerholt werden.

Bezüglich des Antriebsstrangs 19 ist eine Kennlinie des Gaspedalsensors 22 angepasst und/oder eine Schaltdrehzahl eines automatischen Getriebes vorgegeben. Bezüglich einer Lenkung kann beispielsweise anhand des Lenksensors 28 ein Lenkwinkel erfasst werden und eine Übersetzung bzw. eine haptische Rückkopplung eines Steer-by-Wire Systems kann angepasst werden. Bezüglich eines Sicherheitssystems 21 kann beispielsweise ein Auslösepunkt eines Gurtstraffers eingestellt werden. Zur Einstellung eines Fahrwerks 17, 18 kann beispielsweise eine magnetische Dämpfung bzw. ein Druck in Luftfedern angepasst werden.

Alternativ zu einer manuellen Wahl des zu nutzenden Fahrmodus kann eine solche Auswahl auch automatisch erfolgen, beispielsweise in Abhängigkeit eines erfassten Fahrerzustandes. Hierzu können, beispielsweise über den Sensor 24, der beispielsweise eine Innenraumkamera ist, bzw. über den Lenksensor 28 Informationen über den Fahrerzustand ermittelt werden. Ergänzend kann über eine separat von dem Kraftfahrzeug ausgebildete Kommunikationseinrichtung 23, in Beispiel über eine Smartwatch, eine Erfassung von Zustandsinformationen erfolgen. Beispielsweise kann ein Puls oder ein Blutdruck des Fahrers 26 gemessen werden. Erfasste Zustandsinformationen können über die Kommunikationsschnittstelle 27 des Kraftfahrzeugs 1 an diese übertragen und dort durch die Steuereinrichtung 5 ausgewertet werden.

Wird beispielsweise eine Agitation des Fahrers festgestellt, kann automatisch von einem Sport- in einer Komfortmodus gewechselt werden. Wird beispielweise eine Müdigkeit des Fahrers 26 ermittelt, kann ein automatisierter Fahrbetrieb eingeleitet werden und somit von einem niederautomatisierten Fahrmodus zu einem höherautomatisierten Fahrmodus gewechselt werden. Auch diese automatischen Wechsel zwischen verschiedenen Fahrmodi können durch Änderung des Betriebsmodus der Steuereinrichtung 5 und somit durch Wechsel des über die Außenleuchte 2 abgestrahlte Leuchtmusters für andere Verkehrsteilnehmer visualisiert werden.

Während ein Fahrerzustand im obigen Beispiel ausgewertet wurde, um einen Fahrmodus des Kraftfahrzeugs zu wechseln und erst der Wechsel des Fahrmodus durch Wahl eines entsprechenden Leuchtmusters visualisiert wurde, ist es ergänzt möglich, dass der genutzte Betriebsmodus der Steuereinrichtung 5 und somit das über zumindest eine der Außenleuchten 2, 3, 4 abgestrahlte Leuchtmuster von einem Fahrerzustand abhängt. Beispielsweise kann auf Basis einer ermittelten Müdigkeit oder geringen Aufmerksamkeit eines Fahrers das Leuchtmuster gewechselt werden, um den umliegenden Verkehr hierauf hinzuweisen, während der Fahrer 26 aufgefordert werden kann, eine Pause einzulegen und somit das Kraftfahrzeug an geeignete Stelle vorübergehend abzustellen.

Wie sich aus einem Vergleich der in Fig. 2 und 3 gezeigten Leuchtmuster 6, 15 ergibt, sind für beide Leuchtmuster 6, 15 die gleiche Anzahl von Segmenten 10 - 14 aktiv, sodass ähnlich große Leuchtfläche und ähnliche Helligkeiten für beide Leuchtmuster 6, 15 erreicht werden. Insbesondere können somit beide Leuchtmuster 6, 15 gesetzliche Vorgaben für eine als Schlusslicht genutzte Außenleuchte 2 erfüllen, sodass unabhängig von genutzten Betriebsmodus der Steuereinrichtung 5 bzw. unabhängig vom genutzten Leuchtmuster 6, 15 die Außenleuchte 2 die Funktion als Schluss- bzw. Positionslicht erfüllen kann. Entsprechend kann beispielsweise die Außenleuchte 3 gleichzeitig als Blinker und als Mittel zur Informationsausgabe über das gewählte Leuchtmusters und die Außenleuchte 4 gleichzeitig als Tagfahrlicht und als Mittel zur Informationsausgabe durch Wahl eines entsprechenden Leuchtmusters dienen.

Beispielhaft werden in Fig. 2 und 3 nur zwei unterschiedliche Leuchtmuster 6, 15 dargestellt. Durch eine unterschiedliche Auswahl der genutzten Leuchtsegmente 10 - 14 können jedoch eine Vielzahl weiterer Leuchtmuster realisiert werden, wobei es beispielsweise auch möglich ist, dass für unterschiedlich der Leuchtflächen 7 - 9 jeweils unterschiedliche der Segmente 7 - 14 aktiviert werden. Somit ist es beispielsweise möglich, drei unterschiedliche Leuchtmuster zu nutzen, um einen Komfortmodus, einen Sportmodus und einen Effizienzmodus des Kraftfahrzeugs 1 visualisieren zu können. Alternativ oder ergänzend können verschiedene Leuchtmuster genutzt werden, um verschiedene Automatisierungsgrade zu visualisieren und/oder um gewisse Fahrerzustände zu visualisieren.

## Patentansprüche

1. Kraftfahrzeug mit einer Außenleuchte (2, 3, 4) und eine Steuereinrichtung (5), wobei die Steuereinrichtung (5) dazu eingerichtet ist, einerseits in einem ersten Betriebsmodus die Außenleuchte (2, 3, 4) zur Ausgabe eines ersten Leuchtmusters (6) anzusteuern und eine Wechselbedingung auszuwerten und bei Erfüllung der Wechselbedingung in einen zweiten Betriebsmodus zu wechseln und andererseits in dem zweiten Betriebsmodus die Außenleuchte (2, 3, 4) zur Ausgabe eines von dem ersten Leuchtmuster (6) unterschiedlichen zweiten Leuchtmusters (15) anzusteuern, wobei die Erfüllung der Wechselbedingung davon abhängt, welcher von mehreren Fahrmodi des Kraftfahrzeugs (1) für einen momentanen oder zukünftigen Betrieb ausgewählt ist,
**dadurch gekennzeichnet,**
**dass** die oder eine weitere Steuereinrichtung (5, 16) des Kraftfahrzeugs (1) dazu eingerichtet ist, in Abhängigkeit des gewählten Fahrmodus wenigstens einen Parameter eines Fahrwerks (17, 18) und/oder eines Antriebsstrangs (19), und zwar die Schaltdrehzahlen eines Automatikgetriebes und/oder eine Kennlinie des Gaspedals und/oder einen Parameter eines Differentials, und/oder einer Lenkung (20), und zwar eine Kennlinie der Lenkung und/oder eine Lenkübersetzung und/oder ein Unterstützungsgrad einer Servolenkung, vorzugeben.

2. Kraftfahrzeug nach Anspruch 1,
**dadurch gekennzeichnet,**
**dass** die oder die weitere Steuereinrichtung (5, 16) des Kraftfahrzeugs (1) zusätzlich dazu eingerichtet ist, in Abhängigkeit des gewählten Fahrmodus wenigstens einen Parameter eines Sicherheitssystems (21) des Kraftfahrzeugs (1) vorzugeben und/oder das Kraftfahrzeug (1) in zumindest einem der Fahrmodi zumindest teilautomatisiert zu führen, wobei sich die Fahrmodi bezüglich des Automatisierungsgrades unterscheiden.

3. Kraftfahrzeug nach Anspruch 1 oder 2,
**dadurch gekennzeichnet,**
**dass** die Erfüllung der Wechselbedingung zusätzlich von einem ermittelten Fahrerzustand abhängt.

4. Kraftfahrzeug nach Anspruch 3,
**dadurch gekennzeichnet,**
**dass** das Kraftfahrzeug (1) wenigstens einen Sensor (24), insbesondere einen bildgebenden Sensor, zur Erfassung von den Fahrer (26) betreffenden Sensordaten umfasst, wobei die Steuereinrichtung (5) dazu eingerichtet ist, den Fahrerzustand in Abhängigkeit der Sensordaten zu ermitteln.

5. Kraftfahrzeug nach Anspruch 3 oder 4
**dadurch gekennzeichnet,**
**dass** das Kraftfahrzeug (1) eine Kommunikationsschnittstelle (27) zur Kommunikation mit einer separat von dem Kraftfahrzeug (1) ausgebildeten Kommunikationseinrichtung (23), insbesondere mit einem Smartphone oder einer Smartwatch oder einem Tablet-PC, umfasst, wobei die Steuereinrichtung (5) dazu eingerichtet ist, den Fahrerzustand in Abhängigkeit von über die Kommunikationsschnittstelle (27) von der Kommunikationseinrichtung (23) empfangenen Zustandsinformationen zu ermitteln.

6. Kraftfahrzeug nach einem der vorangehenden Ansprüche,
**dadurch gekennzeichnet,**
**dass** das erste und/oder das zweite Leuchtmuster (6, 15) fest vorgegeben sind.

7. Kraftfahrzeug nach einem der vorangehenden Ansprüche,
**dadurch gekennzeichnet,**
**dass** die Steuereinrichtung (5) dazu eingerichtet ist, die Außenleuchte (2, 3, 4) sowohl in dem ersten als auch in dem zweiten Betriebsmodus als Tagfahrlicht oder Positionslicht oder Schlusslicht anzusteuern.

8. Kraftfahrzeug nach einem der vorangehenden Ansprüche,
**dadurch gekennzeichnet,**
**dass** die Außenleuchte (2, 3, 4) mehrere unabhängig ansteuerbare Segmente (10 - 14) aufweist, wobei sich das erste und zweite Leuchtmuster (6, 15) zumindest bezüglich der Ansteuerung eines der Segmente (10 - 14) voneinander unterscheiden.

9. Kraftfahrzeug nach einem der vorangehenden Ansprüche,
**dadurch gekennzeichnet,**
**dass** die Steuereinrichtung (5) dazu eingerichtet ist, in dem zweiten Betriebsmodus wenigstens eine weitere Wechselbedingung auszuwerten und bei Erfüllung einer jeweiligen der weiteren Wechselbedingungen in den ersten Betriebsmodus oder einen jeweiligen weiteren Betriebsmodus zu wechseln, wobei die Erfüllung der jeweiligen weiteren Wechselbedingung davon abhängt, welcher der mehreren Fahrmodi des Kraftfahrzeugs (1) für einen momentanen oder zukünftigen Betrieb ausgewählt ist, und/oder wobei die Erfüllung der jeweiligen weiteren Wechselbedingung von dem ermittelten Fahrerzustand abhängt.

10. Verfahren zum Betrieb wenigstens einer Außenleuchte (2, 3, 4) eines Kraftfahrzeugs (1), wobei
- die Außenleuchte (2, 3, 4) in einem ersten Betriebsmodus zur Ausgabe eines ersten Leuchtmusters (6) ansteuert wird,
- während des Betriebs im ersten Betriebsmodus wiederholt eine Wechselbedingung ausgewertet wird, wobei im Rahmen dieser Auswertung einerseits berücksichtigt wird, welcher von mehreren Fahrmodi des Kraftfahrzeugs (1) für einen momentanen oder zukünftigen Betrieb ausgewählt ist,
- bei Erfüllung der Wechselbedingung in eine zweiten Betriebsmodus gewechselt wird, und
- die Außenleuchte (2, 3, 4) in dem zweiten Betriebsmodus zur Ausgabe eines von dem ersten Leuchtmuster (6) unterschiedlichen zweiten Leuchtmusters (15) angesteuert wird,
wobei durch die oder eine weitere Steuereinrichtung (5, 16) des Kraftfahrzeugs (1) in Abhängigkeit des gewählten Fahrmodus wenigstens ein Parameter eines Fahrwerks (17, 18) und/oder eines Antriebsstrangs (19), und zwar die Schaltdrehzahlen eines Automatikgetriebes und/oder eine Kennlinie des Gaspedals und/oder einen Parameter eines Differentials, und/oder einer Lenkung (20), und zwar eine Kennlinie der Lenkung und/oder eine Lenkübersetzung und/oder ein Unterstützungsgrad einer Servolenkung, vorgegeben wird.

## Claims

1. Motor vehicle having an exterior light (2, 3, 4) and a control device (5), wherein the control device (5) is configured, on the one hand in a first operating mode, to control the exterior light (2, 3, 4) to output a first light pattern (6) and to evaluate a changeover condition and to change to a second operating mode if the changeover condition is met and, on the other hand in the second operating mode, to control the exterior light (2, 3, 4) to output a second light pattern (15) that differs from the first light pattern (6), wherein the meeting of the changeover condition depends on which of a plurality of driving modes of the motor vehicle (1) has been selected for current or future operation,
**characterized**
**in that** the or a further control device (5, 16) of the motor vehicle (1) is configured to specify, on the basis of the selected driving mode, at least one parameter of a chassis (17, 18) and/or of a drive train (19), specifically the shift speeds of an automatic transmission and/or a characteristic curve of the accelerator pedal, and/or a parameter of a differential, and/or of a steering system (20), specifically a characteristic curve of the steering system and/or a steering ratio and/or a degree of assistance of a power steering system.

2. Motor vehicle according to Claim 1,
**characterized**
**in that** the or the further control device (5, 16) of the motor vehicle (1) is additionally configured to specify, on the basis of the selected driving mode, at least one parameter of a safety system (21) of the motor vehicle (1) and/or to guide the motor vehicle (1) in an at least partially automated manner in at least one of the driving modes, wherein the driving modes differ in terms of the degree of automation.

3. Motor vehicle according to Claim 1 or 2,
**characterized**
**in that** the meeting of the changeover condition additionally depends on a determined driver state.

4. Motor vehicle according to Claim 3,
**characterized**
**in that** the motor vehicle (1) comprises at least one sensor (24), in particular an imaging sensor, for capturing sensor data relating to the driver (26), wherein the control device (5) is configured to determine the driver state on the basis of the sensor data.

5. Motor vehicle according to Claim 3 or 4,
**characterized**
**in that** the motor vehicle (1) comprises a communication interface (27) for communicating with a communication device (23) that is separate from the motor vehicle (1), in particular with a smartphone or a smartwatch or a tablet PC, wherein the control device (5) is configured to determine the driver state on the basis of state information received from the communication device (23) via the communication interface (27).

6. Motor vehicle according to one of the preceding claims,
**characterized**
**in that** the first and/or the second light pattern (6, 15) is/are firmly specified.

7. Motor vehicle according to one of the preceding claims,
**characterized**
**in that** the control device (5) is configured to control the exterior light (2, 3, 4) both in the first operating mode and in the second operating mode as a daytime running light or position light or taillight.

8. Motor vehicle according to one of the preceding claims,
**characterized**
**in that** the exterior light (2, 3, 4) has a plurality of independently controllable segments (10-14), wherein the first and second light patterns (6, 15) differ from one another at least in terms of the control of one of the segments (10-14).

9. Motor vehicle according to one of the preceding claims,
**characterized**
**in that** the control device (5) is configured to evaluate at least one further changeover condition in the second operating mode and to change to the first operating mode or to a respective further operating mode if a respective one of the further changeover conditions is met, wherein the meeting of the respective further changeover condition depends on which of the plurality of driving modes of the motor vehicle (1) has been selected for current or future operation, and/or wherein the meeting of the respective further changeover condition depends on the determined driver state.

10. Method for operating at least one exterior light (2, 3, 4) of a motor vehicle (1), wherein
- the exterior light (2, 3, 4) is controlled in a first operating mode to output a first light pattern (6),
- a changeover condition is repeatedly evaluated during operation in the first operating mode, wherein, during this evaluation, it is taken into account, on the one hand, which of a plurality of driving modes of the motor vehicle (1) has been selected for current or future operation,
- there is a changeover to a second operating mode if the changeover condition is met, and
- the exterior light (2, 3, 4) is controlled in the second operating mode to output a second light pattern (15) that differs from the first light pattern (6),
wherein the or a further control device (5, 16) of the motor vehicle (1) specifies, on the basis of the selected driving mode, at least one parameter of a chassis (17, 18) and/or of a drive train (19), specifically the shift speeds of an automatic transmission and/or a characteristic curve of the accelerator pedal, and/or a parameter of a differential, and/or of a steering system (20), specifically a characteristic curve of the steering system and/or a steering ratio and/or a degree of assistance of a power steering system.

## Revendications

1. Véhicule automobile comprenant une lampe extérieure (2, 3, 4) et un dispositif de commande (5), le dispositif de commande (5) étant conçu pour, d'une part dans un premier mode de fonctionnement, commander la lampe extérieure (2, 3, 4) pour émettre un premier motif lumineux (6) et évaluer une condition de changement et passer dans un deuxième mode de fonctionnement lorsque la condition de changement est remplie et, d'autre part dans le deuxième mode de fonctionnement, commander la lampe extérieure (2, 3, 4) pour émettre un deuxième motif lumineux (15) différent du premier motif lumineux (6), le fait que la condition de changement est remplie dépendant du mode de conduite du véhicule automobile (1) qui est sélectionné parmi plusieurs pour un fonctionnement momentané ou futur,
**caractérisé en ce que**
le ou un autre dispositif de commande (5, 16) du véhicule automobile (1) est conçu pour, en fonction du mode de conduite sélectionné, prédéfinir au moins un paramètre d'un train de roulement (17, 18) et/ou d'une chaîne cinématique (19), à savoir les vitesses de rotation de changement de rapport d'une boîte de vitesses automatique et/ou une courbe caractéristique de la pédale d'accélérateur et/ou un paramètre d'un différentiel et/ou d'une direction (20), à savoir une courbe caractéristique de la direction et/ou une démultiplication de direction et/ou un degré d'assistance d'une direction assistée.

2. Véhicule automobile selon la revendication 1, **caractérisé en ce que** le ou l'autre dispositif de commande (5, 16) du véhicule automobile (1) est en plus conçu pour, en fonction du mode de conduite sélectionné, prédéfinir au moins un paramètre d'un système de sécurité (21) du véhicule automobile (1) et/ou conduire le véhicule automobile (1) de manière au moins partiellement automatisés dans au moins l'un des modes de conduite, les modes de conduite se distinguant du point de vue du degré d'automatisation.

3. Véhicule automobile selon la revendication 1 ou 2, **caractérisé en ce que** le fait que la condition de changement est remplie dépend en plus d'un état du conducteur déterminé.

4. Véhicule automobile selon la revendication 3, **caractérisé en ce que** le véhicule automobile (1) comporte au moins un capteur (24), notamment un capteur d'imagerie, destiné à acquérir des données de capteur concernant le conducteur (26), le dispositif de commande (5) étant conçu pour déterminer l'état du conducteur en fonction des données de capteur.

5. Véhicule automobile selon la revendication 3 ou 4, **caractérisé en ce que** le véhicule automobile (1) comporte une interface de communication (27) destinée à la communication avec un dispositif de communication (23) formé séparément du véhicule automobile (1), notamment avec un Smartphone ou une montre connectée ou un PC tablette, le dispositif de commande (5) étant conçu pour déterminer l'état du conducteur en fonction d'informations d'état reçues par le dispositif de communication (23) par le biais de l'interface de communication (27).

6. Véhicule automobile selon l'une des revendications précédentes, **caractérisé en ce que** le premier et/ou le deuxième motif lumineux (6, 15) sont prédéfinis à demeure.

7. Véhicule automobile selon l'une des revendications précédentes, **caractérisé en ce que** le dispositif de commande (5) est conçu pour commander la lampe extérieure (2, 3, 4) en tant que feu de circulation diurne ou feu de position ou feu arrière aussi bien dans le premier que dans le deuxième mode de fonctionnement.

8. Véhicule automobile selon l'une des revendications précédentes, **caractérisé en ce que** la lampe extérieure (2, 3, 4) possède plusieurs segments de lampe (10 - 14) commandables indépendamment, le premier et le deuxième motif lumineux (6, 15) se différenciant l'un de l'autre pour ce qui concerne la commande de l'un des segments (10 - 14) .

9. Véhicule automobile selon l'une des revendications précédentes, **caractérisé en ce que** le dispositif de commande (5) est conçu pour, dans le deuxième mode de fonctionnement, évaluer au moins une condition de changement supplémentaire et, lorsque l'une des conditions de changement respectivement supplémentaires, passer dans le premier mode de fonctionnement ou un mode de fonctionnement supplémentaire respectif, le fait que la condition de changement respectivement supplémentaire est remplie dépendant du mode de conduite du véhicule automobile (1) qui est sélectionné parmi plusieurs pour un fonctionnement momentané ou futur, et/ou le fait que la condition de changement respectivement supplémentaire est remplie dépendant de l'état du conducteur déterminé.

10. Procédé pour faire fonctionner au moins une lampe extérieure (2, 3, 4) d'un véhicule automobile (1),
- la lampe extérieure (2, 3, 4) étant commandée dans un premier mode de fonctionnement pour émettre un premier motif lumineux (6),
- pendant le fonctionnement dans le premier mode de fonctionnement, une condition de changement étant évaluée de manière répétée, le mode de conduite du véhicule automobile (1) qui est sélectionné parmi plusieurs pour un fonctionnement momentané ou futur étant d'une part pris en considération dans le cadre de cette évaluation,
- un passage dans un deuxième mode de fonctionnement ayant lieu dans le cas où la condition de changement est remplie, et
- la lampe extérieure (2, 3, 4) étant commandée dans le deuxième mode de fonctionnement pour émettre un deuxième motif lumineux (15) différent du premier motif lumineux (6),
au moins un paramètre d'un train de roulement (17, 18) et/ou d'une chaîne cinématique (19), à savoir les vitesses de rotation de changement de rapport d'une boîte de vitesses automatique et/ou une courbe caractéristique de la pédale d'accélérateur et/ou un paramètre d'un différentiel et/ou d'une direction (20), à savoir une courbe caractéristique de la direction et/ou une démultiplication de direction et/ou un degré d'assistance d'une direction assistée, étant prédéfini par le ou un autre dispositif de commande (5, 16) du véhicule automobile (1) en fonction du mode de conduite sélectionné.
